# EUROPÄISCHE PATENTSCHRIFT

(11) **EP 1 544 488 B1**
(45) Veröffentlichungstag und Bekanntmachung des Hinweises auf die Patenterteilung: **09.07.2008**
(21) Anmeldenummer: 04025606.7
(22) Anmeldetag: 28.10.2004
(51) Int. Cl.: F16D 1/10, E05F 15/16

(54) **Getriebe-Antriebseinheit, insbesondere ein Fensterheberantrieb, mit einem Adapterelement**
Gear unit, especially window regulator, comprising an adapting element
Unité d'entraînement, de préference une unité d'entraînement de lève-vitre, avec un élément d'adaptation

(30) Priorität: 20.12.2003 DE 10360195
(43) Veröffentlichungstag der Anmeldung: 22.06.2005
(73) Patentinhaber: ROBERT BOSCH GMBH, 70442 Stuttgart (DE)
(72) Erfinder: Lampert, Rico, 77880 Sasbach (DE); Tasch, Franz, 76287 Rheinstetten (DE)

(56) Entgegenhaltungen:
- DE-U1- 9 114 785
- DE-U1- 9 311 664
- US-A- 6 051 901
- US-A1- 2002 047 376

## Beschreibung

### Stand der Technik

Die Erfindung betrifft eine Getriebe-Antriebseinheit mit einem Adapterelement nach der Gattung des unabhängigen Anspruchs 1, sowie ein Verfahren zum Hersteller einer Getriebe - Antriebseinbeit.

Mit der G 91 04 125.2 ist ein Fensterheberantrieb bekannt geworden, bei dem über ein Schneckengetriebe ein Abtriebsrad angetrieben wird, in dem Dämpfungselemente zur Dämpfung eines Mitnehmers in Umfangsrichtung angeordnet sind. Der Mitnehmer greift hierzu mit Fortsätzen in Aussparungen der Dämpfungselemente und weist außerhalb des Getriebegehäuses eine Kerbverzahnung auf, die beispielsweise eine Mechanik eines Fensterhebers antreibt.

Mit der DE 9114 785 U1 ist ein Kraftfahrzeug-Stellantrieb bekannt geworden, bei dem ein Schneckenrad über eine auf der Ankerwelle eines Elektromotors angeordnete Schnecke angetrieben wird. Innerhalb des Schneckenrads befindet sich ein Mitnehmer, in dem ein Abtriebsritzel gelagert ist.

Auf Grund unterschiedlicher Schnittstellen verschiedener Kunden zu den Kraft-übertragungsmitteln der Stellmechanik müssen bei dieser Ausführung für verschiedene Schnittstellen jeweils unterschiedliche Mitnehmertypen in das Getriebe montiert werden. Dies ist auf Grund der Bauteilevielfalt montagetechnisch relativ aufwändig. Da der Mitnehmer ein recht großes Bauteil darstellt, sind die Werkzeugkosten für die Herstellung vieler verschiedener Mitnehmertypen auf Grund der geringeren Stückzahl recht hoch. Des weiteren besteht die Notwendigkeit, schon bei der Montage der Getriebe-Antriebseinheit die jeweilige Kundenschnittstelle genau zu definieren.

### Vorteile der Erfindung

Die erfindungsgemäße Getriebe-Antriebseinheit mit den kennzeichnenden Merkmalen des unabhängigen Anspruchs 1 hat den Vorteil, dass das Getriebe mit dem Mitnehmer komplett im Getriebegehäuse montiert werden kann und anschließend unterschiedliche Adapterelemente für die jeweiligen kundenspezifischen Schnittstellen nachträglich aufgesteckt werden können. Durch die Verwendung des relativ großen baugleichen Mitnehmerteils kann das Getriebe recht kostengünstig gefertigt werden. Das deutlich kleinere Adapterelement kann auch bei kleineren Stückzahlen für spezifische Kundenschnittstellen relativ günstig gefertigt werden. Außerdem kann das Adapterelement noch kurzfristig nach der Montage des Getriebegehäuses leicht an die kundenspezifische Verstellmechanik angepasst werden.

Durch die in den Unteransprüchen aufgeführten Maßnahmen ergeben sich vorteilhafte Weiterbildungen und Verbesserungen der im Anspruch 1 angegebenen Merkmale. Wird das Adapterelement im Kunststoff-Spritzgussverfahren hergestellt, so können auf Grund der kleinen Abmessungen des Adapterelements viele Teile gleichzeitig in mehreren Nestern eines Spritzguss-Werkzeugs kostengünstig hergestellt werden. Durch die Wahl des entsprechenden Kunststoffs, beispielsweise glasfaserverstärktem Polyamid, kann sowohl die mechanische Stabilität, als auch die Reibeigenschaft der beiden Außenprofile optimiert werden.

Das Adapterelement ist erfindungsgemäß auf einer Getriebewelle gelagert, auf der ebenfalls der Mitnehmer und das Abtriebsrad angeordnet sind. Dadurch wird das Adapterelement bezüglich des Mitnehmers zentriert, wodurch der Verschleiß zwischen dem ersten Außenprofil und dem Innenprofil des Mitnehmers minimiert wird.

Zur Montage des Adapterelements wird dieses beispielsweise nach der kompletten Montage des Getriebegehäuses axial mit der ersten Außenverzahnung in die Innenverzahnung des Mitnehmers eingesetzt und axial fixiert. Die axiale Fixierung kann vorteilhaft mit einem Klemmring erfolgen, der das Adapterelement gegen die Getriebeachse abstützt.

Es ist von Vorteil, die Abmessung des Adapterelements so klein wie möglich zu wählen, da dann die Fertigungskosten auch für geringe Stückzahlen niedrig gehalten werden können. Daher ist es günstig, den Außendurchmesser des Adapterelements deutlich geringer auszuführen, als der Außendurchmesser des Mitnehmers im Bereich der Dämpfungselemente.

Für die Variabilität des Antriebs, sowie für eine kurzfristige Anpassung der Antriebseinheit an Kundenschnittstellen - auch für Anwendungen mit geringen Stückzahlen - ist es besonders vorteilhaft, das Getriebegehäuse derart auszubilden, dass das unveränderliche Mitnehmer-Bauteil standardmäßig immer komplett in das Getriebegehäuse montiert werden kann. Dabei kann das kundenspezifische Adapterelement jeweils nachträglich ohne großen Montageaufwand vorteilhaft auf den Adapter gesteckt werden.

Für Anwendungen mit großer Kraftübertragung und hoher Verschleißfestigkeit, kann sowohl für das erste, als auch für das zweite Außenprofil vorteilhaft eine Vielfachverzahnung verwendet werden, da hier bei geringem Durchmesser eine große Fläche für die Kraftübertragung zur Verfügung gestellt wird. Entsprechend der Anforderungen der Drehmomentübertragung kann jedoch auch in einfacher Weise ein Mehrkantprofil am Adapterelement angeformt werden.

Auf Grund des Spritzgussverfahrens kann die Form des Außenprofils leicht an die kundenspezifische Anforderung angepasst werden, so dass die Außenverzahnung beispielsweise zylinderförmig oder zum besseren Einfügen und Zentrieren auch konisch geformt werden kann.

Um ein Axialspiel zwischen der Antriebseinheit und der Verstellmechanik zu vermeiden, kann zwischen den beiden Außenprofilen am Adapterelement ein Bund angeformt werden, an dem einerseits der Mitnehmer der Antriebseinheit und/oder andererseits das Kraftübertragungsmittel der Verstellmechanik axial anliegen.

Für die kostengünstige Herstellung des Adapterelements wird vorteilhaft eine mehrteilige Spritzgussform verwendet, wobei für das Anformen des ersten Außenprofils zum Einfügen in den Mitnehmer immer das selbe Formteil verwendet werden kann und für die verschiedenen kundenspezifischen Ausführungen des zweiten Außenprofils jeweils unterschiedliche zweite Formteile verwendet werden können. Dieses Verfahren reduziert die Werkzeugkosten für das Herstellen der Adapterelemente, wodurch die Getriebe-Antriebseinheit sehr kostengünstig für viele individuelle Schnittstellen zur Verfügung gestellt werden kann.

### Zeichnung

In der Zeichnung sind verschiedene Ausführungsbeispiele einer erfindungsgemäßen Antriebseinheit dargestellt und in der nachfolgenden Beschreibung näher erläutert.

Es zeigen
- Figur 1: eine Getriebevorrichtung nach dem Stand der Technik,
- Figur 2: eine erfindungsgemäße Getriebe-Antriebseinheit mit einem Adapterelement und
- Figur 3: ein weiteres Ausführungsbeispiel eines Adapterelements vor der Montage auf eine Getriebe-Antriebseinheit.

### Beschreibung der Ausführungsbeispiele

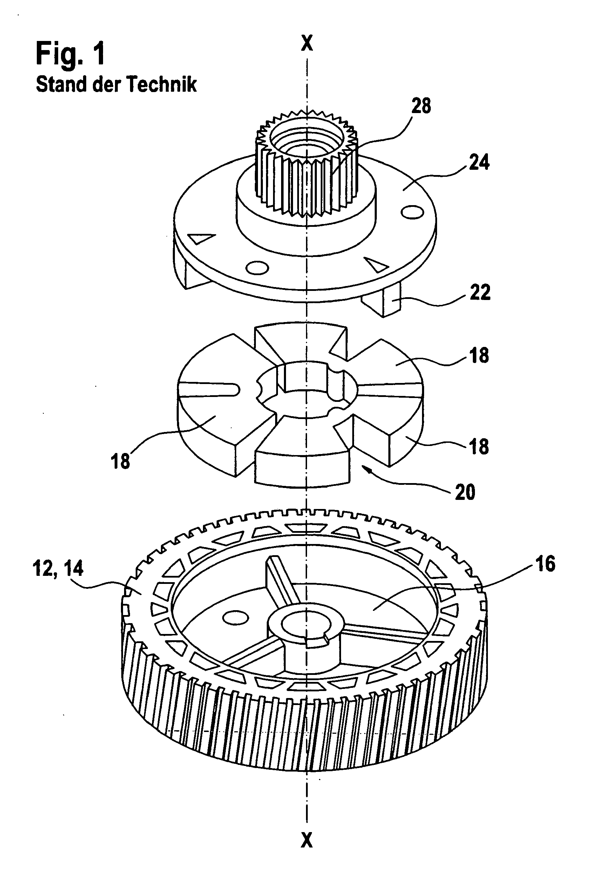

In Figur 1 ist als Stand der Technik beispielsweise ein Schneckenrad 12 einer Getriebe-Antriebseinheit 10 dargestellt, in das eine Dämpfvorrichtung, beispielsweise zum Abfedern von Stößen beim Fahren gegen einen Anschlag eines zu verstellenden beweglichen Teils integriert ist. Hierzu sind im Inneren des als Hohlrad 14 ausgebildeten Schneckenrads 12 Taschen 16 angeformt, in die elastische Dämpfelemente 18 eingelegt werden. Die Dämpfelemente 18 weisen wiederum Aussparungen 20 auf, in die Fortsätze 22 eines Mitnehmers 24 greifen. Als Schnittstelle zu einer Verstellmechanik 26 weist der Mitnehmer 24 ein Abtriebsritzel 28 auf, das einstückig an den Mitnehmer 24 angeformt ist. Werden der Mitnehmer 24, die Dämpfelemente 18 und das Hohlrad 14 zusammenmontiert und auf einer nicht dargestellten Lagerachse 30 entlang der Linie X-X gelagert, weist das Abtriebsritzel 28 eine Dämpfung in Umfangsrichtung gegenüber dem Schneckenrad 12 auf.

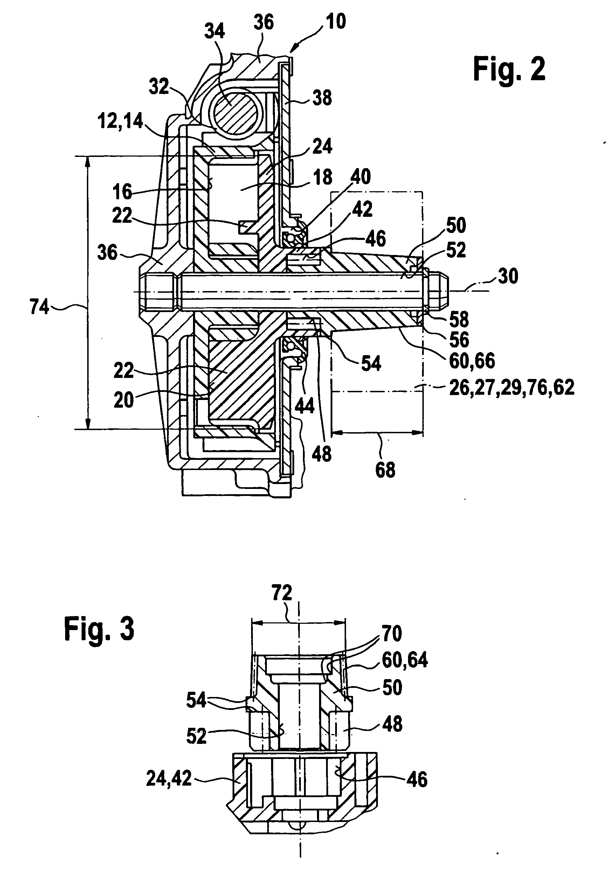

Figur 2 zeigt eine erfindungsgemäße Getriebe-Antriebseinheit 10, bei dem das Abtriebsrad 10 über eine Schnecke 32 einer Ankerwelle 34 elektromotorisch angetrieben wird. Im Inneren des Abtriebsrads 12 sind, wie in Figur 1, Dämpfungselemente 18 in Taschen 16 angeordnet, wobei Fortsätze 22 des Mitnehmers 24 in die Aussparung 20 der Dämpfelemente 18 greifen. Dabei ist sowohl das Schneckenrad 12, als auch der Mitnehmer 24 auf der Lagerachse 30 gelagert, die in einem Gehäuse 36 befestigt ist. Das Gehäuse 36 wird von einem Gehäusedeckel 38 abgeschlossen, wobei durch eine kreisförmige Öffnung 40 des Gehäusedeckels 38 die Lagerachse 30 und ein zylindrischer Teil 42 des Mitnehmers 24 ragt. Zwischen dem Gehäusedeckel 38 und dem Mitnehmer 24 ist eine Dichtung 44 angeordnet, die das Getriebegehäuse 36 schmutz- und wasserdicht abdichtet. Der fertig im Getriebegehäuse 36, 38 montierte Mitnehmer 24 weist an seinem zylindrischen Teil 42 ein Innenprofil 46 auf, in das ein Außenprofil 48 eines Adapterelements 50 eingefügt ist. Das Adapterelement 50 weist eine zentrale Bohrung 52 zur Lagerung auf der Lagerachse 30 auf. Dabei wird das erste Außenprofil 48 des Adapterelements 50 axial in die korrespondierende Innenverzahnung 46 eingeschoben, bis der Mitnehmer 24 gegen einen am Adapterelement 50 angeformten Bund 54 anliegt. Zur axialen Sicherung des Adapterelements 50 ist am Ende der Achse 30 eine Anlaufscheibe 56 mittels eines Klemmelements 58 angeordnet. Auf der dem Mitnehmer 24 abgewandten Seite des Bundes 54 weist das Adapterelement 50 ein zweites Außenprofil 60 auf, das mit einem kundenspezifischen Kraftübertragungsmittel 26 einer Verstellmechanik 62 für ein bewegliches Teil zusammenwirkt. Das zweite Außenprofil 60 ist im Ausführungsbeispiel konisch ausgeformt, wodurch sich das Adapterelement 50 leichter in das Kraftübertragungsmittel 26 einführen lässt und in diesem zentriert wird.

Da für die Getriebe-Antriebseinheit 10 immer ein identischer Mitnehmer 24 mit einem gleichbleibenden Innenprofil 46 verbaut wird, weisen auch alle kundenspezifischen Adapterelemente 50 immer das gleiche erste Außenprofil 48, beispielsweise eine zylindrische Kerbverzahnung 64, auf. Das zweite Außenprofil 60 hingegen wird dem jeweiligen kundenspezifischen Kraftübertragungsmittel 26 angepasst und ist beispielsweise als Außenmehrkant-Profil 66 oder ebenfalls als Kerbverzahnung 64 ausgebildet. Bei den verschiedenen Adapterelementen 50 kann auch die Länge 68 des zweiten Außenprofils 60 unterschiedlich groß sein. Je nach Anwendung kann das Kraftübertragungsmittel 26 als Zahnrad 27 oder aber auch als Riemenscheibe 29 oder als Seilzug 76 ausgebildet sein.

In Figur 3 ist ein weiteres Ausführungsbeispiel eines Adapterelements 50 dargestellt, bevor dieses in das Innenprofil 46 des Mitnehmers 24 eingefügt wird. Das Adapterelement 50 weist ebenfalls eine zentrale Ausnehmung 52 für die Lagerung auf der Lagerachse 30 auf, wobei am axialen Ende am zweiten Außenprofil 60 ein Absatz 70 zur Aufnahme der Anlaufscheibe 56 und des Klemmelements 58 angeformt ist. Das erste Außenprofil 48 ist wieder als Vielfachverzahnung, wie in Figur 2, ausgebildet, das zweite Außen profil 60 weist jedoch für andere kundenspezifische Kraftübertragungsmittel 26, abweichend vom zweiten Außenprofil 60 in Figur 2, eine Kerbverzahnung 64 auf. Das Adapterelement 50 weist einen Außendurchmesser 72 auf, der deutlich geringer ist, als der Außendurchmesser 74 des in dem Getriebegehäuse 36 eingeschlossenen Mitnehmers 24. Dadurch kann das viel kleinere Adapterelement 50 (Außendurchmesser 74 beispielsweise 15 - 20 mm) weit kostengünstiger in kleinen Stückzahlen für kundenspezifische Schnittstellen hergestellt werden, da hierfür die Werkzeugkosten deutlich geringer sind, als für die Herstellung des Mitnehmers 24 mit relativ großen Abmessungen 74. Das Adapterelement 50 wird mittels Kunststoff-Spritzguss-Verfahren hergestellt, wobei vorzugsweise ein glasfaserverstärktes Polyamid (beispielsweise 30% Glasfaser) verwendet wird. Auf Grund der kleinen Abmessungen des Adapterelements 50 können in einer Spritzgussform gleichzeitig viele Nester angeordnet werden, wobei beispielsweise für das Spritzen des ersten Außenprofils 48 immer der gleiche Teil der Spritzgussform verwendet werden kann und lediglich das Formteil für das zweite Außenprofil 60 entsprechend der kundenspezifischen Anforderungen variiert wird.

Es sei angemerkt, dass hinsichtlich der in allen Figuren und in der Beschreibung gezeigten Ausführungsbeispiele vielfältige Kombinationsmöglichkeiten der einzelnen Merkmale untereinander möglich sind. So kann der Aufbau des Antriebs 10, des Getriebes und des Gehäuses 36, 38 variiert werden. Ebenso kann das Innenprofil 46 des Mitnehmers 24 mit dem korrespondierenden Außenprofil 48 des Adapterelements 50 entsprechend des zu übertragenden Drehmoments als beliebiger Außenvielkant 66 oder Verzahnung 64 oder als sonstiger Formschluss ausgebildet sein. In einer weiteren Ausgestaltung kann das zweite Außenprofil 60 auch direkt als Seiltrommel 76 für einen Fensterheber-Seilzug ausgebildet sein. Bevorzugt findet die erfindungsgemäße Getriebe-Antriebseinheit 10 mit dem kundenspezifischen Adapterelement 50 Verwendung für die Verstellung von Fensterscheiben oder Schiebedächern, kann jedoch auch für andere bewegliche Teile, insbesondere im Kraftfahrzeug, Anwendung finden.

## Patentansprüche

1. Getriebe-Antriebseinheit (10), insbesondere ein Fensterheberantrieb, mit einem Adapterelement (50) zur Übertragung eines Drehmoments auf unterschiedliche Verstellmechaniken beweglicher Teile, insbesondere Fenster-scheiben, wobei das Adapterelement (50) eine zentrale Ausnehmung (52) zur Lagerung auf einer Lagerachse (30) der Getriebe-Antriebseinheit (10) aufweist, **dadurch gekennzeichnet, dass** das Adapterelement (50) ein erstes gleichbleibendes Außenprofil (48) aufweist, das mit einem Innenprofil (46) eines Mitnehmers (24) zusammenwirkt, der in Dämpfungsmittel (18) eines Abtriebrads (12) der Getriebe-Antriebseinheit (10) greift, und das Adapterelement (50) ein zweites kundenspezifisches Außenprofil (60) zum Eingriff in ein entsprechendes kundenspezifisches Kraftübertragungsmittel (26) der Verstellmechanik (62) aufweist.

2. Getriebe-Antriebseinheit (10) nach Anspruch 1, **dadurch gekennzeichnet, dass** das Adapterelement (50) mittels Spritzgussverfahren aus Kunststoff - insbesondere aus glasfaserverstärktem Polyamid - gefertigt ist.

3. Getriebe-Antriebseinheit (10) nach einem der Ansprüche 1 oder 2, **dadurch gekennzeichnet, dass** das Adapterelement (50) zusammen mit dem Mitnehmer (24) und einem Schneckenrad (12) auf der Lagerachse 30 gelagert ist, die in einem Gehäuse (36) der Getriebe-Antriebseinheit (10)befestigt ist.

4. Getriebe-Antriebseinheit (10) nach einem der vorhergehenden Ansprüche, **dadurch gekennzeichnet, dass** das Adapterelement (50) axial gegen den Mitnehmer (24) gepresst und axial auf der Lagerachse (30) fixiert ist.

5. Getriebe-Antriebseinheit (10) nach einem der vorhergehenden Ansprüche, **dadurch gekennzeichnet, dass** das Adapterelement (50) einen Außendurchmesser (72) aufweist, der kleiner ist als der Außendurchmesser (74) des Mitnehmers.

6. Getriebe-Antriebseinheit (10) nach einem der vorhergehenden Ansprüche, **dadurch gekennzeichnet, dass** die Getriebe-Antriebseinheit (10) ein Gehäuse (36, 38) aufweist und das Adapterelement (50) auf die Getriebe-Antriebseinheit (10) aufsteckbar ist, nachdem das Gehäuse (36, 38) komplett montiert ist.

7. Getriebe-Antriebseinheit (10) nach einem der vorhergehenden Ansprüche, **dadurch gekennzeichnet, dass** das erste und/oder zweite Außenprofil (48, 60) als Kerbverzahnung (64) ausgebildet ist.

8. Getriebe-Antriebseinheit (10) nach einem der vorhergehenden Ansprüche, **dadurch gekennzeichnet, dass** das erste und/oder zweite Außen profil (48, 60) in axialer Richtung zylindrisch und/oder konisch ausgebildet ist.

9. Getriebe-Antriebseinheit (10) nach einem der vorhergehenden Ansprüche, **dadurch gekennzeichnet, dass** zwischen dem ersten Außenprofil (48) und dem zweiten Außenprofil (60) ein Bund (54) ausgebildet ist, der als axialer Anschlag dient.

10. Verfahren zum Herstellen einer Getriebe-Antriebseinheit (10) nach einem der vorhergehenden Ansprüche, **dadurch gekennzeichnet, dass** das Adapterelement (50)mittels eines Spritzgusswerkzeugs hergestellt wird, das mindestens zwei axiale Formteile aufweist, von denen zumindest eines zum Anformen verschiedener kundenspezifischer zweiter Außenprofile (60) auswechselbar ist.

## Claims

1. Gear/drive unit (10), in particular a window lifter drive, having an adapter unit (50) for transmitting a torque to different adjusting mechanisms of movable parts, in particular window panes, the adapter element (50) having a central recess (52) for mounting on a bearing pivot (30) of the gear/drive unit (10), **characterized in that** the adapter element (50) has a first constant outer profile (48) which interacts with an inner profile (46) of a driver (24) which engages into damping means (18) of an output gear (12) of the gear/drive unit (10), and the adapter element (50) has a second customer-specific outer profile (60) for engaging into a corresponding customer-specific force transmission means (26) of the adjusting mechanism (62).

2. Gear/drive unit (10) according to Claim 1, **characterized in that** the adapter element (50) is produced by means of injection moulding processes from plastic, in particular from glass fibre-reinforced polyamide.

3. Gear/drive unit (10) according to either of Claims 1 and 2, **characterized in that** the adapter element (50) is mounted together with the driver (24) and a worm gear (12) on the bearing pivot (30) which is fastened in a housing (36) of the gear/drive unit (10).

4. Gear/drive unit (10) according to one of the preceding claims, **characterized in that** the adapter element (50) is pressed axially against the driver (24) and is fixed axially on the bearing pivot (30).

5. Gear/drive unit (10) according to one of the preceding claims, **characterized in that** the adapter element (50) has an external diameter (72) which is smaller than the external diameter (74) of the driver.

6. Gear/drive unit (10) according to one of the preceding claims, **characterized in that** the gear/drive unit (10) has a housing (36, 38) and the adapter element (50) can be plugged onto the gear/drive unit (10) after the housing (36, 38) is completely mounted.

7. Gear/drive unit (10) according to one of the preceding claims, **characterized in that** the first and/or second outer profiles/profile (48, 60) are/is configured as a serrated toothing system (64).

8. Gear/drive unit (10) according to one of the preceding claims, **characterized in that** the first and/or second outer profile/profiles (48, 60) are/is of cylindrical and/or conical configuration in the axial direction.

9. Gear/drive unit (10) according to one of the preceding claims, **characterized in that** a collar (54) which serves as an axial stop is formed between the first outer profile (48) and the second outer profile (60).

10. Method for producing a gear/drive unit (10) according to one of the preceding claims, **characterized in that** the adapter element (50) is produced by means of an injection mould which has at least two axial shaped parts, of which at least one can be exchanged for integrally forming different customer-specific second outer profiles (60).

## Revendications

1. Unité d'entraînement et de transmission (10) notamment un entraînement de lève-glace comportant un élément adaptateur (50) pour transmettre un couple à des pièces mobiles de différents mécanismes d'actionnement notamment de vitre,
l'élément adaptateur (50) ayant une cavité centrale (52) pour servir de palier à un axe de palier (30) de l'unité d'entraînement et de transmission (10),
**caractérisée en ce que**
l'élément adaptateur (50) a un premier profil extérieur (48) constant, coopérant avec un profil intérieur (46) d'un organe d'entraînement (24), qui pénètre dans des moyens d'amortissement (18) d'une roue entraînée (12) de l'unité d'entraînement et de transmission (10), et
l'élément adaptateur (50) a un second profil extérieur (60) spécifique à la demande du client, pour pénétrer dans un moyen de transmission de force (26) spécifique au client, correspondant, du mécanisme d'actionnement (62).

2. Unité d'entraînement et de transmission (10) selon la revendication 1,
**caractérisée en ce que**
l'élément adaptateur (50) est fabriqué par injection de matière plastique, notamment en polyamide renforcé par des fibres de verre.

3. Unité d'entraînement et de transmission (10) selon l'une quelconque des revendications 1 ou 2,
**caractérisée en ce que**
l'élément adaptateur (50) est monté sur l'axe de palier (30) avec l'organe d'entraînement (24) et une roue à vis (12), cet axe de palier étant fixé dans un boîtier (36) de l'unité d'entraînement et de transmission (10).

4. Unité d'entraînement et de transmission (10) selon l'une quelconque des revendications précédentes,
**caractérisée en ce que**
l'élément adaptateur (50) est pressé axialement contre l'organe d'entraînement (24) et bloqué axialement sur l'axe de palier (30).

5. Unité d'entraînement et de transmission (10) selon l'une quelconque des revendications précédentes,
**caractérisée en ce que**
l'élément adaptateur (50) a un diamètre extérieur (72) plus petit que le diamètre extérieur (74) de l'organe d'entraînement.

6. Unité d'entraînement et de transmission (10) selon l'une quelconque des revendications précédentes,
**caractérisée en ce que**
l'unité d'entraînement et de transmission (10) comporte un boîtier (36, 38) et l'élément adaptateur (50) peut être enfiché sur l'unité d'entraînement et de transmission (10) après montage complet du boîtier (36, 38).

7. Unité d'entraînement et de transmission (10) selon l'une quelconque des revendications précédentes,
**caractérisée en ce que**
le premier et/ou le second profil extérieur (48, 60) est réalisé sous la forme d'un profil dentelé.

8. Unité d'entraînement et de transmission (10) selon l'une quelconque des revendications précédentes,
**caractérisée en ce que**
le premier et/ ou le second profil extérieur (48, 60) a une forme cylindrique et/ ou conique dans la direction axiale.

9. Unité d'entraînement et de transmission (10) selon l'une quelconque des revendications précédentes,
**caractérisée par**
une collerette (54) servant de butée axiale entre le premier profil extérieur (48) et le second profil extérieur (60).

10. Procédé de fabrication d'une unité d'entraînement et de transmission (10) selon l'une quelconque des revendications précédentes,
**caractérisé en ce que**
l'élément adaptateur (50) est fabriqué à l'aide d'un outil d'injection ayant au moins deux parties axiales de moule dont au moins l'une peut être échangée pour mouler différents seconds profils extérieurs (60) spécifiques au client.
